# EUROPÄISCHE PATENTSCHRIFT

(11) **EP 1 956 248 B1**
(45) Veröffentlichungstag und Bekanntmachung des Hinweises auf die Patenterteilung: **21.08.2013**
(21) Anmeldenummer: 08000887.3
(22) Anmeldetag: 18.01.2008
(51) Int. Cl.: F15B 13/06, F15B 13/07, F16H 61/30, F16H 61/688

(54) **Vorrichtung zum Ansteuern einer Vielzahl von hydraulischen Schaltzylinder**
Device for controlling a number of hydraulic switching cylinders
Dispositif destiné à la commande d'une multitude de cylindres de commutation hydrauliques

(30) Priorität: 12.02.2007 DE 102007006802
(43) Veröffentlichungstag der Anmeldung: 13.08.2008
(73) Patentinhaber: Schaeffler Technologies AG & Co. KG, 91074 Herzogenaurach (DE)
(72) Erfinder: Staudinger, Martin, 76275 Ettlingen (DE); Müller, Eric, 67657 Kaiserslautern (DE)

(56) Entgegenhaltungen:
- EP-A1- 1 635 091
- EP-A2- 0 050 944
- EP-A2- 1 420 185
- EP-A2- 1 596 104

## Beschreibung

Die Erfindung betrifft eine Vorrichtung zum Ansteuern einer Vielzahl von hydraulischen Schaltzylindern.

Vorrichtungen zum Ansteuern einer Vielzahl von hydraulischen Schaltzylindern können beispielsweise in Kraftfahrzeugen zur hydraulischen Ansteuerung eines Schaltgetriebes des Kraftfahrzeuges eingesetzt werden. Bei dem Schaltgetriebe kann es sich um ein Doppelkupplungsgetriebe handeln. Dazu ist es beispielsweise bekannt, die Schaltzylinder mittels eines Druckregelventils und einem diesem nachgeschalteten Drehschieber anzusteuern.

Aus der EP 1 635 091 A1 ist eine hydraulische Steuerungsvorrichtung für ein automatisiertes Doppelkupplungsgetriebe zum Ansteuern einer Vielzahl von hydraulischen Schaltzylindern bekannt, mit einem Druckregelventil, mit einem ersten und einem zweiten Druckregelausgang, einem den Druckregelausgängen nachgeschalteten ersten Schaltventil, einem dem ersten Schaltventil nachgeschalteten zweiten Schaltventil mit einer Vielzahl von Einzeldruckausgängen, wobei der zweite Druckregelausgang über das erste und zweite Schaltventil wahlweise einem der Einzeldruckausgänge zuordenbar ist, und die jeweils nicht dem zweiten Druckregelausgang zugeordneten Einzeldruckausgänge dem ersten Druckregelausgang zuordenbar sind.

Aufgabe der Erfindung ist es, eine alternative und/oder verbesserte Vorrichtung zum Ansteuern einer Mehrzahl von hydraulischen Schaltzylindern bereitzustellen.

Die Aufgabe ist mit einer Vorrichtung zum Ansteuern einer Vielzahl von hydraulischen Schaltzylindern mit einem Druckregelventil mit einem ersten und einem zweiten Druckregelausgang, einem den Druckregelausgängen nachgeschalteten ersten Schaltventil und einem dem ersten Schaltventil nachgeschalteten zweiten Schaltventil mit einer Vielzahl von Einzeldruckausgängen, wobei der zweite Druckregelausgang über das erste und zweite Schaltventil wahlweise einem der Einzeldruckausgänge zuordenbar ist und die jeweils nicht dem zweiten Druckregelausgang zugeordneten Einzeldruckausgänge dem Druckregelausgang zuordenbar sind, wobei dem ersten Druckregelausgang ein Sammelanschluss zugeordnet ist und dem Sammelanschluss vier der Schaltzylinder und den Einzeldruckausgängen vier weitere der Schaltzylinder zugeordnet sind gelöst.

Vorteilhaft kann durch die Hintereinanderschaltung des Druckregelventils und der zwei Schaltventile jeweils einer der Einzeldruckausgänge des zweiten Schaltventils mit dem zweiten Druckregelausgang verbunden werden, also beispielsweise mit Druck beaufschlagt werden. Alle verbleibenden Einzeldruckausgänge des zweiten Schaltventils können gleichzeitig dem ersten Druckregelausgang zugeordnet werden, also beispielsweise drucklos geschaltet werden. Vorteilhaft können die in den Druckregelausgängen des Druckregelventils herrschenden Druckverhältnisse umgekehrt werden, so dass beispielsweise auch wahlweise einer der Einzeldruckausgänge drucklos geschaltet und die übrigen mit Druck beaufschlagt werden können.

Über den Sammelanschluss können vorteilhaft die jeweils nicht mit dem zweiten Druckregelausgang verbundenen Schaltzylinder auf ein und dasselbe Druckniveau gebracht werden.

Das zugeordnete Schaltgetriebe kann also insgesamt acht Schaltzylinder aufweisen, die üblicherweise paarweise entgegengesetzt wirkend ausgestaltet sind, wobei jeweils ein Paar zur Betätigung einer Schaltgabel zum Einlegen von zwei Gängen ausgelegt ist. Die Verschaltung mit dem Sammelanschluss kann dabei so erfolgen, dass jeder der Doppelzylinder auf einer Seite mit dem Sammelanschluss und auf der anderen Seite mit einem der Einzeldruckausgänge verschaltet ist. So ist es möglich, jeweils einen der mit den Einzeldruckausgängen verschalteten Schaltzylinder mit Druck zu beaufschlagen, wobei alle übrigen Schaltzylinder drucklos geschaltet werden können, wobei dies über die Sammelleitung und die Schaltventile, die die übrigen Einzeldruckausgänge auf die Sammelleitung schalten können, erfolgen kann.

Bei einer Umkehr der Druckverhältnisse durch das Druckregelventil können folglich an allen acht Schaltzylindern die Druckverhältnisse umgekehrt werden, so dass insgesamt sieben der Schaltzylinder druckbeaufschlagt sind und der verbleibende über den entsprechenden Einzeldruckausgang mit dem zweiten Druckregelausgang verbundene Schaltzylinder drucklos ist. Durch die entsprechende Verschaltung mit dem Druckregelventil und den zwei Schaltventilen können also sämtliche denkbare Schaltstellungen der Schaltzylinder angefahren werden.

Weitere bevorzugte Ausführungsbeispiele sind dadurch gekennzeichnet, dass das erste Schaltventil einen ersten Schalteingang und einen ersten und einen zweiten Schaltausgang aufweist, wobei der erste Schalteingang dem zweiten Druckregelausgang nachgeschaltet ist und wahlweise einem der Schaltausgänge zuordenbar ist, wobei der jeweils übrige Schaltausgang dem Sammelanschluss zuordenbar ist. Durch diese Verschaltung können also die in dem Druckregelausgang herrschenden Druckverhältnisse wahlweise an einen der Schaltausgänge weitergeschaltet werden, wobei der jeweils andere Schaltausgang dem Sammelanschluss beziehungsweise dem ersten Druckregelausgang zuordenbar ist.

Weitere bevorzugte Ausführungsbeispiele sind dadurch gekennzeichnet, dass das zweite Schaltventil einen dem ersten Schaltausgang nachgeschalteten zweiten Schalteingang und einen dem zweiten Schaltausgang nachgeschalteten dritten Schalteingang aufweist. Über den zweiten und dritten Schalteingang kann also die Nachschaltung des zweiten Schaltventils erfolgen.

Weitere bevorzugte Ausführungsbeispiele sind dadurch gekennzeichnet, dass der zweite Schalteingang des zweiten Schaltventils wahlweise einem ersten oder zweiten Einzeldruckausgang und der dritte Schalteingang des zweiten Schaltventils wahlweise einem dritten und vierten Einzeldruckausgang des zweiten Schaltventils zuordenbar ist, wobei der jeweils nicht zugeordnete Einzeldruckausgang dem Sammelanschluss zuordenbar ist. Durch die Hintereinanderschaltung des ersten Schaltventils und des zweiten Schaltventils kann also der zweite Druckregelausgang wahlweise auf einen der ersten bis vierten Einzeldruckausgänge des zweiten Schaltventils geschaltet werden. Vorteilhaft sind dabei die jeweils übrigen Einzeldruckausgänge entweder direkt über das zweite Schaltventil oder indirekt über den ersten Schaltausgang des ersten Schaltventils dem Sammelanschluss zuordenbar.

Die Aufgabe wird außerdem durch die Verwendung einer Vorrichtung wie oben beschrieben in einem hydraulischen System eines hydraulischen Schaltgetriebes, insbesondere eines Doppelkupplungsgetriebes, gelöst.

Weitere Vorteile, Merkmale und Einzelheiten ergeben sich aus der nachfolgenden Beschreibung, in der unter Bezugnahme auf die Zeichnung ein Ausführungsbeispiel im Einzelnen beschrieben ist. Gleiche, ähnliche und/oder funktionsgleiche Teile sind mit gleichen Bezugszeichen versehen. Es zeigen:
- Figur 1: einen Teil eines hydraulisch angesteuerten Doppelkupplungsgetriebes mit insgesamt acht paarweise doppelt wirkenden Schaltzylindern;
- Figur 2: eine Vorrichtung zum Ansteuern der in Figur 1 gezeigten Schaltzylinder in einer ersten Stellung eines Druckregelventils und
- Figur 3: die in Figur 2 gezeigte Vorrichtung, jedoch in einer zweiten Schaltstellung des Druckregelventils.

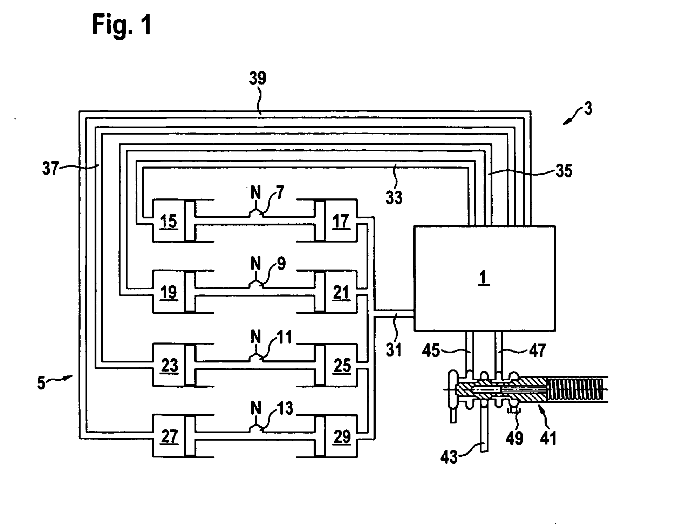

Figur 1 zeigt eine Vorrichtung 1 als Teil einer hydraulischen Steuerung 3 eines Doppelkupplungsgetriebes 5. Das Doppelkupplungsgetriebe 5 weist eine erste Schaltgabel 7, eine zweite Schaltgabel 9, eine dritte Schaltgabel 11 und eine vierte Schaltgabel 13 auf. Die Schaltgabeln 7 bis 13 sind jeweils dazu ausgelegt, wahlweise einen von zwei Gängen des Doppelkupplungsgetriebes 5 einzulegen. Die erste Schaltgabel 7 und die zweite Schaltgabel 9 können beispielsweise zum Einlegen der ungeraden Gänge ausgelegt sein. Dementsprechend können die dritte Schaltgabel 11 sowie die vierte Schaltgabel 13 zum Einlegen der geraden Gänge des Doppelkupplungsgetriebes 5 ausgelegt sein.

Die Schaltgabeln 7 bis 13 sind einer Vielzahl von Schaltzylindern zugeordnet. Die erste Schaltgabel 7 ist einem ersten Schaltzylinder 15 und einem zweiten Schaltzylinder 17 zugeordnet. Die zweite Schaltgabel 9 ist einem dritten Schaltzylinder 19 und einem vierten Schaltzylinder 21 zugeordnet. Die dritte Schaltgabel 11 ist einem fünften Schaltzylinder 23 und einem sechsten Schaltzylinder 25 zugeordnet. Die vierte Schaltgabel 13 ist einem siebten Schaltzylinder 27 und einem achten Schaltzylinder 29 zugeordnet. Die Schaltzylinder jeweils einer der Schaltgabeln 7 bis 13 sind gegenläufig wirkend ausgelegt, so dass beispielsweise ein höherer Druck in dem ersten Schaltzylinder 15 als in dem zweiten Schaltzylinder 17 zu einer Bewegung der ersten Schaltgabel 7, in Ausrichtung der Figur 1 gesehen, nach rechts führt, und umgekehrt.

Die Schaltzylinder 17, 21, 25 und 29 sind alle gleichermaßen über eine Mehrfachverzweigung einem Sammelanschluss 31 fluidisch zugeordnet. Der Sammelanschluss 31 mündet in die Vorrichtung 1 zur Ansteuerung der Schaltzylinder 15 bis 29. Die Schaltzylinder 15, 19, 23 und 27 sind ebenfalls mit der Vorrichtung 1 verbunden, jedoch jeweils einzeln. Genauer ist der erste Schaltzylinder 15 über einen ersten Einzeldruckausgang 33, der dritte Schaltzylinder 19 über einen zweiten Einzeldruckausgang 35, der fünfte Schaltzylinder 23 über einen dritten Einzeldruckausgang 37 und der siebte Schaltzylinder 27 über einen vierten Einzeldruckausgang 39 der Vorrichtung 1 zugeordnet.

Stromabwärts ist die Vorrichtung 1 an ein Druckregelventil 41 mit einem Druckregeleingang 43, einem ersten Druckregelausgang 45 und einem zweiten Druckregelausgang 47 angeschlossen. Das Druckregelventil 41 ist dazu ausgelegt, die Druckregelausgänge 45 und 47 wahlweise mit Druck zu beaufschlagen, wobei der jeweils nicht mit Druck beaufschlagte Druckregelausgang drucklos geschaltet werden kann beziehungsweise mit einem Tank 49 verbindbar ist. Die Vorrichtung 1 ist dazu ausgelegt, wahlweise einen der Einzeldruckausgänge 33 bis 39 mit dem ersten Druckregelausgang 45 zu verbinden, wobei die übrigen Einzeldruckausgänge 33 bis 39 sowie der Sammelanschluss 31 mit dem zweiten Druckregelausgang 47 verbindbar sind. Auf diese Art und Weise können die Schaltzylinder 15, 19, 23 und 27 wahlweise mit Druck beaufschlagt werden, wobei die jeweils übrigen Schaltzylinder drucklos sind, und umgekehrt. Ob der jeweils von der Vorrichtung 1 angesteuerte Schaltzylinder drucklos ist oder mit Druck beaufschlagt ist, hängt von der Schaltstellung des Druckregelventils 41 ab beziehungsweise davon, welcher der Druckregelausgänge 45 und 47 drucklos beziehungsweise mit Druck beaufschlagt ist.

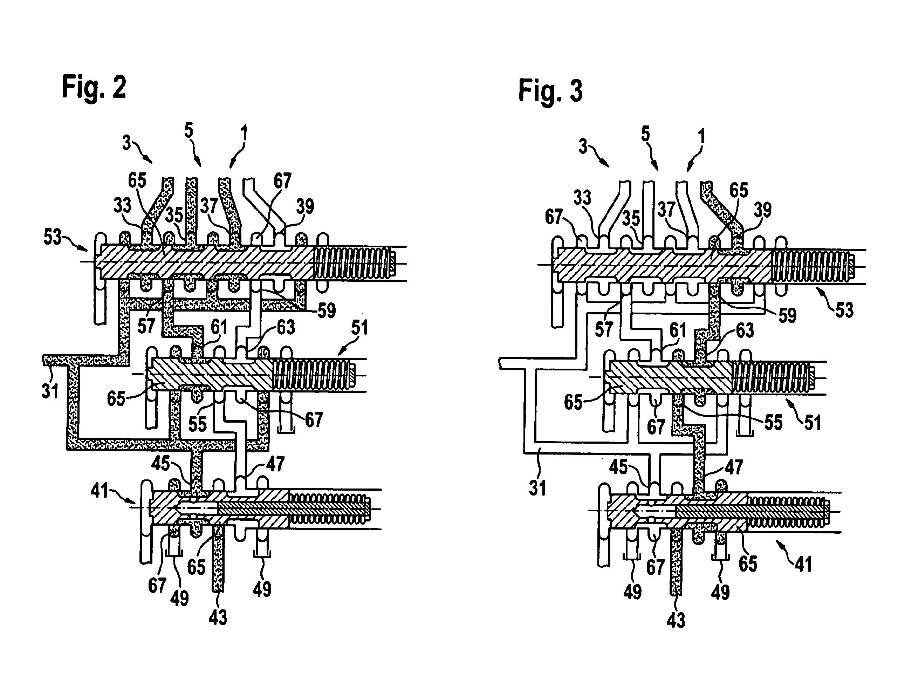

Figur 2 zeigt eine Detailansicht der in Figur 1 eingesetzten Vorrichtung 1 in einer ersten Schaltstellung des Druckregelventils 41, wobei der erste Druckregelausgang 45 mit Druck beaufschlagt und der zweite Druckregelausgang 47 auf den Tank 49 geschaltet ist.

Figur 3 zeigt die in Figur 2 gezeigte Vorrichtung 1, jedoch in einer alternativen Schaltstellung des Druckregelventils 41, wobei der erste Druckregelausgang 45 auf den Tank 49 geschaltet ist und der zweite Druckregelausgang 47 mit dem Druckregeleingang 43 verbunden, also mit Druck beaufschlagt ist.

In den Figuren 2 und 3 sind Druck führende Leitungen gepunktet dargestellt.

Der Druckregeleingang 43 kann einer hydraulischen Energiequelle, beispielsweise einer elektrisch oder mechanisch betriebenen Hydraulikpumpe des Doppelkupplungsgetriebes 5 zugeordnet sein. Die hydraulische Energiequelle ist in den Figuren 1 bis 3 nicht näher dargestellt.

Die Vorrichtung 1 weist neben dem Druckregelventil 41 ein erstes Schaltventil 51 und ein zweites Schaltventil 53 auf. Bei den Schaltventilen 51 und 53 und dem Druckregelventil 41 kann es sich beispielsweise um hydraulisch angesteuerte Ventile handeln. Es ist jedoch auch denkbar, dass die Ventile elektrisch, beispielsweise mittels Magneten oder Proportionalmagneten angesteuert werden. Das erste Schaltventil 51 weist einen ersten Schalteingang 55 auf. Das zweite Schaltventil 53 weist einen zweiten Schalteingang 57 sowie einen dritten Schalteingang 59 auf. Außerdem weist das erste Schaltventil 51 einen ersten Schaltausgang 61 sowie einen zweiten Schaltausgang 63 auf. Der erste Schaltausgang 61 des ersten Schaltventils 51 ist dem zweiten Schalteingang 57 des zweiten Schaltventils 53 zugeordnet. Der zweite Schaltausgang 63 des ersten Schaltventils 51 ist dem dritten Schalteingang 59 des zweiten Schaltventils 53 zugeordnet.

Das zweite Schaltventil 53 weist die Einzeldruckausgänge 33 bis 39 der Vorrichtung 1 auf.

Wie in den Figuren 2 und 3 ersichtlich, ist in der jeweils gezeigten Schaltstellung ein Pfad von dem zweiten Druckregelausgang 47 des Druckregelventils 41 zu dem vierten Einzeldruckausgang 39 geschaltet, nämlich über den ersten Schalteingang 55, das erste Schaltventil 51, den zweiten Schaltausgang 63, den dritten Schalteingang 59 und schließlich das zweite Schaltventil 53. Gemäß Figur 2 ist der geöffnete Pfad drucklos geschaltet und der Sammelanschluss 31 mit Druck beaufschlagt und umgekehrt gemäß Figur 3.

Jedes der Ventile 41, 51 und 53 kann grundsätzlich zwei verschiedene Schaltstellungen einnehmen, so dass sich insgesamt acht verschiedene Schaltstellungen der Vorrichtung 1 ergeben. Zusätzlich kann das Druckregelventil 41 zur Druckregulierung Zwischenstellungen einnehmen. Mittels der Schaltventile 51 und 53 können vier verschiedene Pfade, ausgehend von dem zweiten Druckregelausgang 47 des Druckregelventils 41 alternativ zu jeweils einem der Einzeldruckausgänge 33 bis 39 hin geschaltet werden. Diese vier verschiedenen Schaltzustände der Schaltventile 51 und 53 können jeweils in zwei verschiedenen Schaltstellungen des Druckregelventils 41 mit Druck beaufschlagt werden oder nicht. Mittels dieser acht Kombinationen von Schaltstellungen können die acht Gänge des Doppelkupplungsgetriebes 5 geschaltet werden.

Das Druckregelventil 41 und die Schaltventile 51 und 53 sind, wie in den Figuren 2 und 3 ersichtlich, als Ventile mit mehreren Steuerkolben 65, die mit einer Vielzahl von Steuernuten 67 zusammenwirken, ausgestaltet. Alternativ ist es denkbar, andere Ventilelemente, beispielsweise Schieber oder Sitze zu verwenden. Die verschiedenen Ein- und Ausgänge der Ventile 41, 51 und 53 sind auf bekannte Art und Weise jeweils einer der Steuernuten 67 zugewiesen, wobei die Steuernuten mittels der verschiedenen Steuerkolben 65 ebenfalls auf bekannte Art und Weise verschlossen oder gegebenenfalls paarweise miteinander verbunden werden können. Um die kaskadenförmige Hintereinanderschaltung der Ventile 41, 51 und 53 zu realisieren, sind die jeweiligen Ventilein- und -ausgänge alternierend den unterschiedlichen Steuernuten 67 zugeordnet.

Es ist ersichtlich, dass die zwei Schaltventile 51 und 53 einen beispielsweise aus dem Stand der Technik bekannten Drehschieber zur Ansteuerung der Schaltzylinder 15 bis 29 bei gleicher Funktion ersetzen können. Mittels des Druckregelventils 41 kann entweder ein einzelner Druck auf einen der, in Ausrichtung der Figur 1 gesehen, links angeordneten Schaltzylinder eingestellt werden, oder bei umgeschaltetem Druckregelventil 41 kann der Druck auf den Sammelanschluss 31 geschaltet werden, welcher dann je nach Stellung der zwei Schaltventile 51 und 53 die jeweils restlichen sieben Schaltkolben mit Druck beaufschlagt.

Durch einfaches Hin- und Herschalten der zwei Schaltventile 51 und 53 kann jeweils einer der Einzeldruckausgänge 33 bis 39 als einziger mit Druck beaufschlagt werden oder als einziger druckfrei geschaltet werden, wobei die jeweils anderen Anschlüsse umgekehrte Druckverhältnisse aufweisen. Vorteilhaft ist es möglich, durch die Vorrichtung 1 mit nur einem Proportionalventil, dem Druckregelventil 41, und zwei sehr einfachen, kostengünstigen Ventilen, dem ersten Schaltventil 51 und dem zweiten Schaltventil 53, acht Schaltkolben der acht Schaltzylinder 15 bis 29 für die vier Schaltgabeln 7 bis 13 anzusteuern.

**Bezugszeichenliste**

| | | | |
|---|---|---|---|
| 1 | Vorrichtung | 39 | vierter Einzeldruckausgang |
| 3 | hydraulische Steuerung | 41 | Druckregelventil |
| 5 | Doppelkupplungsgetriebe | 43 | Druckregeleingang |
| 7 | erste Schaltgabel | 45 | erster Druckregelausgang |
| 9 | zweite Schaltgabel | 47 | zweiter Druckregelausgang |
| 11 | dritte Schaltgabel | 49 | Tank |
| 13 | vierte Schaltgabel | 51 | erstes Schaltventil |
| 15 | erster Schaltzylinder | 53 | zweites Schaltventil |
| 17 | zweiter Schaltzylinder | 55 | erster Schalteingang |
| 19 | dritter Schaltzylinder | 57 | zweiter Schalteingang |
| 21 | vierter Schaltzylinder | 59 | dritter Schalteingang |
| 23 | fünfter Schaltzylinder | 61 | erster Schaltausgang |
| 25 | sechster Schaltzylinder | 63 | zweiter Schaltausgang |
| 27 | siebter Schaltzylinder | 65 | Steuerkolben |
| 29 | achter Schaltzylinder | 67 | Steuernuten |
| 31 | Sammelanschluss | | |
| 33 | erster Einzeldruckausgang | | |
| 35 | zweiter Einzeldruckausgang | | |
| 37 | dritter Einzeldruckausgang | | |

## Patentansprüche

1. Vorrichtung (1) zum Ansteuern einer Vielzahl von hydraulischen Schaltzylindern (15,17,19,21,23,25,27,29) mit:
- einem Druckregelventil (41) mit einem ersten und einem zweiten Druckregelausgang (45,47),
- einem den Druckregelausgängen (45,47) nachgeschalteten ersten Schaltventil (51),
- einem dem ersten Schaltventil (51) nachgeschalteten zweiten Schaltventil (53) mit
einer Vielzahl von Einzeldruckausgängen (33,35,37,39),
wobei der zweite Druckregelausgang (47) über das erste und zweite Schaltventil (51,53) wahlweise einem der Einzeldruckausgänge (33,35,37,39) zuordenbar ist, die jeweils nicht dem zweiten Druckregelausgang (47) zugeordneten Einzeldruckausgänge (33,35,37,39) dem ersten Druckregelausgang (45) zuordenbar sind und dem ersten Druckregelausgang (45) ein Sammelanschluss (31) zugeordnet ist, **dadurch gekennzeichnet, dass** dem Sammelanschluss (31) vier der Schaltzylinder (17,21,25,29) und den Einzeldruckausgängen (33,35,37,39) vier weitere der Schaltzylinder (15,19,23,27) zugeordnet sind.

2. Vorrichtung nach dem vorhergehenden Anspruch, **dadurch gekennzeichnet, dass** das erste Schaltventil (51) einen ersten Schalteingang (55) und einen ersten und einen zweiten Schaltausgang (61,63) aufweist, wobei der erste Schalteingang (55) dem zweiten Druckregelausgang (47) nachgeschaltet ist und wahlweise einem der Schaltausgänge (61,63) zuordenbar ist, wobei der jeweils übrige Schaltausgang (61,63) dem Sammelanschluss (31) zuordenbar ist.

3. Vorrichtung nach dem vorhergehenden Anspruch, **dadurch gekennzeichnet, dass** das zweite Schaltventil (53) einen dem ersten Schaltausgang (61) nachgeschalteten zweiten Schalteingang (57) und einen dem zweiten Schaltausgang (63) nachgeschalteten dritten Schalteingang (59) aufweist.

4. Vorrichtung nach dem vorhergehenden Anspruch, **dadurch gekennzeichnet, dass** der zweite Schalteingang (57) des zweiten Schaltventils (53) wahlweise einem ersten oder zweiten Einzeldruckausgang (33,35) und der dritte Schalteingang (59) des zweiten Schaltventils (53) wahlweise einem dritten oder vierten Einzeldruckausgang (37,39) des zweiten Schaltventils (53) zuordenbar ist, wobei der jeweils nicht zugeordnete Einzeldruckausgang (33,35,37,39) dem Sammelanschluss (31) zuordenbar ist.

5. Verwendung einer Vorrichtung (1) nach einem der vorhergehenden Ansprüche in einem hydraulischen System (3) eines hydraulischen Schaltgetriebes, insbesondere eines Doppelkupplungsgetriebes (5).

## Claims

1. Apparatus (1) for actuating a multiplicity of hydraulic shift cylinders (15, 17, 19, 21, 23, 25, 27, 29) having:
- a pressure control valve (41) with a first and a second pressure control outlet (45, 47),
- a first shift valve (51) which is connected downstream of the pressure control outlets (45, 47),
- a second shift valve (53) which is connected downstream of the first shift valve (51) with a multiplicity of individual pressure outlets (33, 35, 37, 39),
it being possible for the second pressure control outlet (47) to be assigned optionally via the first and second shift valves (51, 53) to one of the individual pressure outlets (33, 35, 37, 39), it being possible for the individual pressure outlets (33, 35, 37, 39) which are not assigned in each case to the second pressure control outlet (47) to be assigned to the first pressure control outlet (45), and a collective connection (31) being assigned to the first pressure control outlet (45), **characterized in that** the collective connection (31) is assigned four of the shift cylinders (17, 21, 25, 29), and the individual pressure outlets (33, 35, 37, 39) are assigned a further four of the shift cylinders (15, 19, 23, 27).

2. Apparatus according to the preceding claim, **characterized in that** the first shift valve (51) has a first shift inlet (55) and a first and a second shift outlet (61, 63), the first shift inlet (55) being connected downstream of the second pressure control outlet (47) and being capable of being assigned optionally to one of the shift outlets (61, 63), it being possible for the respectively remaining shift outlet (61, 63) to be assigned to the collective connection (31).

3. Apparatus according to the preceding claim, **characterized in that** the second shift valve (53) has a second shift inlet (57) which is connected downstream of the first shift outlet (61) and a third shift inlet (59) which is connected downstream of the second shift outlet (63).

4. Apparatus according to the preceding claim, **characterized in that** the second shift inlet (57) of the second shift valve (53) can be assigned optionally to a first or second individual pressure outlet (33, 35) and the third shift inlet (59) of the second shift valve (53) can be assigned optionally to a third or fourth individual pressure outlet (37, 39) of the second shift valve (53), it being possible for the individual pressure outlet (33, 35, 37, 39) which is not assigned in each case to be assigned to the collective connection (31).

5. Use of an apparatus (1) according to one of the preceding claims in a hydraulic system (3) of a hydraulic change-speed gearbox, in particular of a dual-clutch gearbox (5).

## Revendications

1. Dispositif (1) pour la commande d'une pluralité de cylindres de commutation hydrauliques (15, 17, 19, 21, 23, 25, 27, 29), comprenant :
- une soupape de régulation de la pression (41) comprenant une première et une deuxième sortie de régulation de pression (45, 47),
- une première soupape de commutation (51) montée en aval des sorties de régulation de pression (45, 47),
- une deuxième soupape de commutation (53) montée en aval de la première soupape de commutation (51) avec une pluralité de sorties de pression individuelles (33, 35, 37, 39),
la deuxième sortie de régulation de pression (47) pouvant être associée de manière sélective à l'une des sorties de pression individuelles (33, 35, 37, 39) par le biais de la première et de la deuxième soupape de commutation (51, 53), les sorties de pression individuelles (33, 35, 37, 39) respectivement non associées à la deuxième sortie de régulation de pression (47) pouvant être associées à la première sortie de régulation de pression (45) et la première sortie de régulation de pression (45) étant associée à un raccord commun (31), **caractérisé en ce que** quatre des cylindres de commutation (17, 21, 25, 29) sont associés au raccord commun (31) et quatre autres des cylindres de commutation (15, 19, 23, 27) sont associés aux sorties de pression individuelles (33, 35, 37, 39).

2. Dispositif selon la revendication précédente, **caractérisé en ce que** la première soupape de commutation (51) présente une première entrée de commutation (55) et une première et une deuxième sortie de commutation (61, 63), la première entrée de commutation (55) étant montée en aval de la deuxième sortie de régulation de pression (47) et pouvant être associée de manière sélective à l'une des sorties de commutation (61, 63), la sortie de commutation respective restante (61, 63) pouvant être associée au raccord commun (31).

3. Dispositif selon la revendication précédente, **caractérisé en ce que** la deuxième soupape de commutation (53) présente une deuxième entrée de commutation (57) montée en aval de la première sortie de commutation (61) et une troisième entrée de commutation (59) montée en aval de la deuxième sortie de commutation (63).

4. Dispositif selon la revendication précédente, **caractérisé en ce que** la deuxième entrée de commutation (57) de la deuxième soupape de commutation (53) peut être associée de manière sélective à une première ou une deuxième sortie de pression individuelle (33, 35) et la troisième entrée de commutation (59) de la deuxième soupape de commutation (53) peut être associée de manière sélective à une troisième ou quatrième sortie de pression individuelle (37, 39) de la deuxième soupape de commutation (53), la sortie de pression individuelle respectivement non associée (33, 35, 37, 39) pouvant être associée au raccord commun (31).

5. Utilisation d'un dispositif (1) selon l'une quelconque des revendications précédentes dans un système hydraulique (3) d'une boîte de vitesses hydraulique, en particulier d'une boîte de vitesses à double embrayage (5).
